# EUROPÄISCHE PATENTSCHRIFT

(11) **EP 2 349 787 B1**
(45) Veröffentlichungstag und Bekanntmachung des Hinweises auf die Patenterteilung: **25.07.2012**
(21) Anmeldenummer: 09737446.6
(22) Anmeldetag: 22.10.2009
(51) Int. Cl.: B60R 17/02

(54) **SCHMIERANLAGE MIT INTEGRIERTER ELEKTRONIK**
LUBRICATION SYSTEM WITH INTEGRATED ELECTRONICS
INSTALLATION DE LUBRIFICATION AVEC ÉLECTRONIQUE INTÉGRÉE

(30) Priorität: 23.10.2008 DE 102008043143
(43) Veröffentlichungstag der Anmeldung: 03.08.2011
(73) Patentinhaber: Jost-Werke GmbH, 63263 Neu-Isenburg (DE)
(72) Erfinder: ALGÜERA, José Manuel, 63739 Aschaffenburg (DE); SAUPE, Swen, 55122 Mainz (DE)
(74) Vertreter: Fuchs
(86) Internationale Anmeldenummer: PCT/EP2009/063914
(87) Internationale Veröffentlichungsnummer: WO 2010/046446

(56) Entgegenhaltungen:
- DE-A1- 2 458 711
- DE-A1- 19 712 807
- US-A- 4 445 168
- US-A- 5 182 720
- US-A- 5 195 612

## Beschreibung

Die Erfindung betrifft eine Schmieranlage für ein Nutzfahrzeug mit einer Schmiereinheit, umfassend ein Schmierstoffreservoir, eine Pumpe und einen daran angeschlossenen Verteiler, an dem Versorgungsleitungen zu mehreren Schmierstellen anbringbar sind, und ein Steuerungsmodul mit mindestens zwei darauf hinterlegten Schmierprogrammen, wobei die Pumpe in einem durch das jeweilige Schmierprogramm vorgegebenen Zyklus einen Fettausstoß initiiert.

Derartige Schmieranlagen werden auch als Zentralschmieranlagen bezeichnet und dienen der Zuführung von Schmierfett an eine Vielzahl von Schmierstellen am Fahrzeug, so dass auch im Fahrbetrieb eine Unterversorgung und ein damit rasch fortschreitender Verschleiß gegeneinander beweglicher Teile verhindert wird. Typische Schmierstellen sind verschiedene Bereiche der Sattelkupplung oder die Achsschenkelbolzen des Fahrzeugs.

Aus dem Stand der Technik ist beispielsweise die EP 1 209 038 A1 bekannt geworden, die ebenfalls ein Schmierstoffreservoir und eine Pumpe offenbart, welche den Schmierstoff in einen Verteiler und in mindestens eine unmittelbar zur Schmierstelle verlaufende Direktleitung fördert. In einem seitlichen Bereich des unteren Pumpenabschnitts ist eine Steuerungseinheit angeordnet, mit der die Einstellung bestimmter Steuerparameter möglich ist, beispielsweise der Zykluszeit sowie der Schmierzeit. Alternativ hierzu wird vorgeschlagen, die Schmierstoffpumpe oder Zentralschmieranlage über eine Schnittstelle an den zentralen Bordcomputer des Fahrzeugs anzuschließen, wodurch die Steuerung und Überwachung sowie die Bedienung der Zentralschmieranlage wesentlich komfortabler werden. Bei dieser Ausführungsform kann eine separate Steuerungseinheit entfallen.

Somit steuert bei der vorstehend beschriebenen Zentralschmieranlage die im Bordcomputer befindliche übergeordnete Elektronik des Fahrzeuges die Schmieranlage an und führt Diagnosefunktionen zur Fehlererkennung durch. Die übergeordnete Elektronik des Fahrzeuges ist üblicherweise auch in der Lage, die Zentralschmieranlage mit verschiedenen Schmierprogrammen anzusteuern, so dass die Schmierstoffversorgung auch bei unterschiedlichen Einsatzbedingungen des Fahrzeuges abgedeckt ist. Im Fernverkehreinsatz wird naturgemäß weniger Fett für die Achsen und die Sattelkupplung benötigt als bei einem Betrieb des Fahrzeuges im Baustellenbereich.

Der Nachteil dieser inzwischen weit verbreiteten Schmieranlagen liegt darin, dass der Kunde ein Fahrzeug mit einer übergeordneten Fahrzeugelektronik bestellen muss, um in den Genuss des vorstehend beschriebenen hohen Bedienungskomforts zu kommen. Die übergeordnete umfangreiche Elektronik wird meistens jedoch, außer für den Betrieb der Zentralschmieranlage, vom Kunden gar nicht benötigt. Darüber hinaus muss die Auswahl der Schmierprogramme durch eine Servicewerkstatt mit einem entsprechenden Diagnose- und Bedienwerkzeug durchgeführt werden.

Einen weiteren Stand der Technik bildet die WO 20061084752 A1 mit einem Schmiersystem zur ausschließlichen Versorgung der Sattelkupplung mit Schmierfett. Die Komponenten dieses bekannten Schmiersystems sollen nebst Steuergerät modulartig in räumlicher Nähe zu der Sattelkupplung angeordnet sein. Eine Versorgung weiterer Schmierstellen ist nicht angedacht.

In der US 5,417,308 A wird vorgeschlagen, ausschließlich die Sattelkupplung über eine aus dem Fahrerhaus fernbedienbare Schmieranlage mit Schmierstoff zu versorgen. Der Ausstoß von Schmierstoff erfolgt jedoch nur durch ein manuelles Betätigen eines Bedienknopfes vom Fahrer. Ein automatischer Schmierbetrieb mit mehreren Schmierprogrammen ist nicht vorgesehen.

Die US 4,445,168 bildet den nächstkommenden Stand der Technik und offenbart eine Schmiervorrichtung mit einer Schmiereinheit, welche ein Schmierstoffreservoir, eine Pumpe und einen Verteiler mit-Schmierleitungen aufweist. Die bekannte Schmiereinheit ist über Leitungen mit einer dazu beabstandeten Eingabevorrichtung verbunden, welche einen in einem Gehäuse befindlichen Micro-Computer umfasst. Des Weiteren sind an dem Gehäuse mehrere Schalter angeordnet, mit denen verschiedene Programmmodi gewählt werden können. An die Eingabevorrichtung ist eine separate Anzeigevorrichtung angeschlossen. Der Micro-Computer ist intensiv in die Elektronik der zu schmierenden Maschine eingebunden und erhält für die Anzeige- und Durchführung der Schmierung eine Vielzahl von Daten unter anderem von externen Sensoren als Eingangsgröße. Als nachteilig hat sich erwiesen, dass die bekannte Schmiervorrichtung intensiv mit weiteren Komponenten vernetzt ist und deshalb nur nach Abstimmung mit dem Fahrzeughersteller in ein Fahrzeug integriert werden könnte.

Demzufolge lag der Erfindung die Aufgabe zugrunde, ein Schmiersystem dahingehend zu verbessern, dass ein Wechsel zwischen den Schmierprogrammen sowie gegebenenfalls das Ausführen einer Zwischenschmierung mit einem autarken Schmiersystem unabhängig von dem Vorhandensein einer übergeordneten Bordelektronik im Fahrbetrieb möglich ist.

Die Aufgabe wird erfindungsgemäß mit einer Schmieranlage gelöst, bei welcher die Schmiereinheit unmittelbar und ausschließlich mit einer im Fahrerhaus oder an anderer zugänglichen Stelle des Fahrzeugs angeordneten Eingabe- und Anzeigevorrichtung kommuniziert, über welche ein Wechsel zwischen den Schmierprogrammen und das Auslösen einer Zwischenschmierung erfolgt. Unter dem Begriff "unmittelbar" wird ein direkter Anschluss der Eingabe- und Anzeigevorrichtung an die Schmiereinheit ohne Zwischenschaltung insbesondere der Fahrzeugelektronik verstanden.

Der wesentliche Vorteil der Schmieranlage liegt zunächst darin, dass die Schmierprogramme ohne zusätzliche Hilfsmittel aus dem Fahrerhaus gewechselt werden können und somit stets ein für den Fahrbetrieb optimales Schmierprogramm gewählt werden kann. Sollte dennoch eine Zwischenschmierung notwendig sein, kann diese vom Fahrer während des Fahrbetriebes eingeleitet werden. Dieses geschieht unabhängig von dem gerade verwendeten Schmierprogramm. Da die Schmieranlage autark und somit unabhängig von dem Fahrzeugsteuergerät und einer damit zusammenhängenden übergeordneten Elektronik arbeitet, kann das Fahrzeug bei seiner Bestellung unabhängig von der Schmieranlage konfiguriert werden. Durch die Entflechtung von Datenströmen wird darüber hinaus das Risiko von Fehlmeldungen und einer fehlerhaften Funktionsweise der Schmieranlage verringert.

Vorzugsweise umfasst die Eingabe- und Anzeigevorrichtung einen einzigen Taster und ein Signalmittel. Diese ermöglichen eine einfache Bedienung des Systems und lassen sich mit äußerst geringen Einbaumaßen in das Cockpit des Fahrzeugs integrieren.

Es hat sich als besonders vorteilhaft herausgestellt, wenn das Steuerungsmodul einen Mikroprozessor aufweist. Der Mikroprozessor dient der Speicherung einer Vielzahl unterschiedlicher Schmierprogramme und erlaubt zudem eine Mehrfachbenutzung des Tasters und des Signalmittels. Gemäß einer bevorzugten Ausführungsform ist die Mehrfachnutzung des einzigen Tasters sowohl für das Auslösen der Zwischenschmierung als auch für den Wechsel zwischen den Schmierprogrammen vorgesehen.

Günstigerweise ist das Signalmittel von dem Mikroprozessor mit einer dem jeweiligen Systemstatus zugeordneten Frequenz angesteuert. So kann das Signalmittel zum Beispiel eine Anzeigeleuchte sein, deren Frequenz entsprechend des Systemstatus blinkt oder, sofern der Schmierstoff annähernd verbraucht ist, in ein Dauerleuchten übergeht. Bei Betätigung des Tasters und Durchführen einer Zwischenschmierung sollte die Anzeigeleuchte über mehrere Sekunden aufleuchten. Wenn eine Störung der Schmieranlage vorliegt, wird der Fahrer insbesondere durch ein anfangs schnelles Blinken darüber informiert. Nach Ablauf von Minuten kann das Blinken in ein dauerhaftes Leuchten übergehen. Wechselt der Fahrer vor Fahrtantritt durch Drücken des Tasters in den Programmmodus, wird auch dieses durch eine entsprechende Signalfolge der Anzeigeleuchte quittiert.

Zweckmäßigerweise sind an der Schmiereinheit maximal ein Anschluss für die elektrische Spannungsversorgung und jeweils ein Anschluss für den Taster und das Signalmittel vorgesehen. Besonders bevorzugt ist eine alternative Ausführungsform, bei der die Anschlüsse der elektrischen Spannungsversorgung, des Tasters und des Signalmittels in einem gemeinsamen Stecker zusammengefasst sind. Durch die Verringerung der Anzahl der Steckkontakte wird eine häufige Fehlerursache minimiert, da es nach einiger Zeit immer wieder vorkommt, dass Feuchtigkeit in die nicht ordnungsgemäß verbundenen oder verschlissenen Stecker eindringt und für Fehlfunktionen sorgt. Insbesondere durch die Verwendung eines einzigen Steckers erfolgt zwangsläufig eine korrekte Kontaktierung aller Pole. Bei Verwendung eines einzigen Steckers ist an diesen zweckmäßigerweise eine einzige zu der im Fahrerhaus befindlichen Eingabe- und Anzeigevorrichtung verlaufende Kontrollleitung angeschlossen, wodurch die Montage besonders bei Nachrüstungen vereinfacht wird.

Vorzugsweise ist an dem Schmierstoffreservoir ein Restmengenschalter angeordnet, welcher mit dem Signalmittel zusammenwirkt und den Fahrer auf einen bevorstehenden Leerstand des Schmierstoffs hinweist.

Besonders vorteilhaft ist eine Ausführungsform, bei der die Komponenten der Schmiereinheit in einem gemeinsamen Gehäuse angeordnet sind. Diese Ausführungsform vereinfacht ebenfalls die modulartige Nachrüstung der Schmieranlage an dem Fahrzeugs, da die Verschaltung der Komponenten bereits innerhalb des Gehäuses vorgenommen ist darüber hinaus besonders kompakte Abmessungen realisiert werden können.

Günstigerweise ist die Schmiereinheit an die Zündung des Fahrzeugs elektrisch angeschlossen. Dadurch ist die Elektronik der Schmiereinheit bei Standzeiten des Fahrzeugs stromlos geschaltet und schont dadurch die Fahrzeugbatterie. Darüber hinaus lässt sich der Einschaltstrom beim Betätigen der Zündung als Signal für eine zeitliche Begrenzung nutzen, um zum Wechseln der Schmierprogramme auf den Programmmodus zurückgreifen zu können.

Es hat sich als zweckmäßig herausgestellt, wenn die Eingabe- und Anzeigevorrichtung eine eigene Spannungsversorgung aufweist. Diese kann beispielsweise aus einer Batterie in der Eingabe- und Anzeigevorrichtung oder einem Anschluss an die Stromversorgung des Fahrzeugs bestehen. Hierdurch wird das Verlegen einer zusätzlichen Stromleitung von der Schmiereinheit zu der Eingabe- und Anzeigevorrichtung vermieden.

Zum besseren Verständnis wird die Erfindung nachfolgend anhand von zwei Figuren näher erläutert. Es zeigen die:
- **Fig. 1:**: eine schematische Seitenansicht auf eine an einer Sattelzugmaschine angeordnete Schmieranlage und
- **Fig. 2:**: einen Schaltplan der erfindungsgemäßen Schmieranlagen.

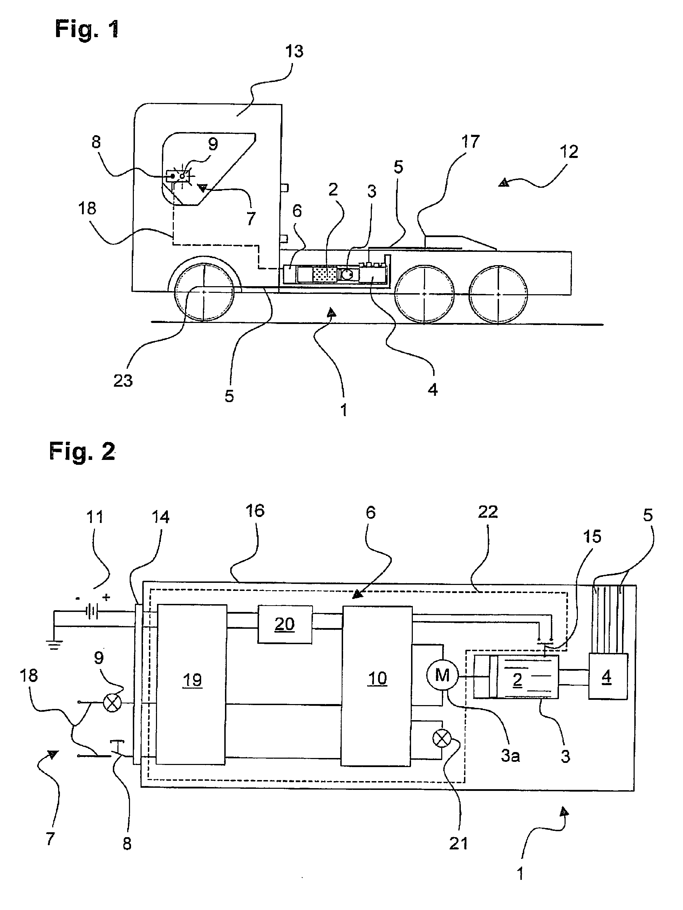

Die Figur 1 zeigt als Fahrzeug 12 eine Sattelzugmaschine mit einem daran angeordneten erfindungsgemäßen Schmiersystem. Die am Chassis des Fahrzeugs 12 ortsfest befindliche Schmiereinheit 1 umfasst ein Schmierstoffreservoir 2, eine Pumpe 3 und einen Verteiler 4. Von dem Verteiler 4 verlaufen Versorgungsleitungen 5 beispielhaft zu nicht näher bezeichneten Schmierstellen einer Sattelkupplung 17 und der Vorderachse 23.

Die Schmiereinheit 1 weist darüber hinaus ein Steuerungsmodul 6 auf, welches über eine Kontrolileitung 18 mit einer im Fahrerhaus 13 angeordneten Eingabe- und Anzeigevorrichtung 7 verbunden ist. Die Eingabe- und Anzeigevorrichtung 7 umfasst einen Taster 8 und ein Signalmittel 9 in Form einer Anzeigeleuchte. Das Steuerungsmodul 6 ist integraler Bestandteil der Schmiereinheit 1.

In dem Steuerungsmodul 6 sind mehrere Schmierprogramme gespeichert, welche für einen zyklischen Betrieb der Pumpe 3 sorgen und dadurch einen Ausstoß des Schmierfettes in den Verteiler 4 und die nachgeschalteten Versorgungsleitungen 5 bewirken.

Mit dem Einschalten der Zündung läuft das jeweils vorgewählte Schmierprogramm in der Schmiereinheit 1 ab. Sofern der Fahrer eine Zwischenschmierung vornehmen möchte, betätigt er vor oder während des Fahrbetriebs den Taster 8 und setzt damit die Pumpe 3 außerhalb des vorgesehenen Programmzyklus in Betrieb. Eine ordnungsgemäße Durchführung der Funktion Zwischenschmierung wird dem Fahrer durch ein einmaliges Aufblinken der Anzeigeleuchte 9 bestätigt.

Für den Fall, dass der Schmierstoffvorrat im Schmierstoffreservoir 2 annähernd verbraucht ist, wird dieses von einem Restmengenschalter 15 (siehe Figur 2) sensiert und dem Fahrer beispielsweise durch ein dauerhaftes Brennen der Anzeigeleuchte 9 der Eingabe- und Anzeigevorrichtung 7 signalisiert.

Die Schmiereinheit 1 ist über den Anschluss 11 (siehe Figur 2) mit der elektrischen Spannungsversorgung des Fahrzeugs 12 verbunden und wird beim Anschalten der Zündung mit Strom versorgt. Durch den elektrischen Anschluss der Schmiereinheit 1 ist die Schmieranlage bereits betriebsbereit. Die Schmieranlage funktioniert dann mit einer Grundeinstellung und gibt in regelmäßigen Zeitabständen eine festgelegte Menge des Schmierstoffs ab. Der Systemstatus kann über die Anzeigeleuchte 9 erkannt werden.

Mit dem Anschalten der Zündung ist es auch möglich, beispielsweise durch längeres Drücken des Tasters 8, zwischen den im Steuerungsmodul 6 hinterlegten Schmierprogrammen zu wählen. Dieser Wechsel des Schmierprogramms kann nur beim Einschalten der Zündung und noch stehendem Fahrzeugmotor vorgenommen werden, um einen unbeabsichtigten Wechsel des Schmierprogramms im Fahrbetrieb zu vermeiden.

In der Figur 2 ist ein schematischer Schaltplan der Schmiereinheit 1 und der daran angeschlossenen Eingabe- und Anzeigevorrichtung 7 zu erkennen. Die Schmiereinheit 1 wird über den Anschluss 11 mit elektrischer Energie versorgt. Um die Elektronik und insbesondere einen Mikroprozessor 10 des Steuerungsmoduls 6 vor äußeren Einflüssen wie elektromagnetischen Störungen, elektrostatischen Störungen oder Falschanschluss zu schützen, weist die Schmiereinheit 1 eine Schutzbeschaltung 19 und nachgeschaltet eine Spannungsaufbereitung 20 auf. Mittels der Spannungsaufbereitung 20 wird die elektrische Spannung des Fahrzeugs 12 an den Spannungspegel der verwendeten Elektronikkomponenten angepasst.

Die Schmierprogramme sind in einem Mikroprozessor 10 hinterlegt, wobei der Mikroprozessor 10 den Pumpenmotor 3a der Pumpe 3 je nach Schmierprogramm in unterschiedlichen Zeitabständen ansteuert. Für Diagnosezwecke ist an dem Mikroprozessor 10 außerdem eine innere Anzeigeleuchte 21 angeschlossen.

Die Schutzbeschaltung 19, die Spannungsaufbereitung 20, der Mikroprozessor 10 und vorzugsweise auch der Pumpenmotor 3a befinden sich auf einer gemeinsamen Platine 22. Der Pumpenmotor 3a sorgt bei seiner Inbetriebnahme für ein Ausschieben des in der Pumpe 3 in einem Schmierstoffreservoir 2 bevorrateten Schmierstoffes. Von der Pumpe 3 gelangt der Schmierstoff in den Verteiler 4 und von dort in die Versorgungsleitungen 5.

Nach Erreichen einer vorgegebenen Mindestmenge des Schmierstoffes wird der Restmengenschalter 15 geschlossen. Diese Änderung des Schaltzustandes des Restmengenschalters 15 erkennt der Mikroprozessor 10 und aktiviert über die Kontrollleitung 18 die Anzeigeleuchte 9 der im Fahrerhaus angeordneten Eingabe- und Anzeigevorrichtung 7.

Die Platine 22 mit den darauf befindlichen Komponenten sowie die Pumpe 3 und der Verteiler 4 sind in einem gemeinsamen Gehäuse 16 kompakt untergebracht.

Der Anschluss 11 zur elektrischen Spannungsversorgung und die zum Taster 8 und zur Anzeigeleuchte 9 verlaufenden Kontrollleitungen 18 sind endseitig in einem gemeinsamen Stecker 14 zusammengefasst. Dieser ist lösbar von außen in eine komplementär im Gehäuse 16 ausgebildete Schnittstelle eingesteckt.

### Bezugszeichenliste

- 1: Schmiereinheit
- 2: Schmierstoffreservoir
- 3: Pumpe
- 3a: Pumpenmotor
- 4: Verteiler
- 5: Versorgungsleitungen
- 6: Steuerungsmodul
- 7: Eingabe- und Anzeigevorrichtung
- 8: Taster
- 9: SignalmittellAnzeigeleuchte
- 10: Mikroprozessor
- 11: Anschluss elektrische Spannungsversorgung
- 12: Fahrzeug
- 13: Fahrerhaus
- 14: Stecker
- 15: Restmengenschalter
- 16: Gehäuse Schmiereinheit
- 17: Sattelkupplung
- 18: Kontroilleitung
- 19: Schutzbeschaltung
- 20: Spannungsaufbereitung
- 21: Anzeigeleuchte innen
- 22: Platine
- 23: Vorderachse

## Patentansprüche

1. Schmieranlage für ein Nutzfahrzeug (12) mit einer Schmiereinheit (1), umfassend ein Schmierstoffreservoir (2), eine Pumpe (3) und einen daran angeschlossenen Verteiler (4), an dem Versorgungsleitungen (5) zu mehreren Schmierstellen anbringbar sind, und ein Steuerungsmodul (6) mit mindestens zwei darauf hinterlegten Schmierprogrammen, wobei die Pumpe (3) in einem durch das jeweilige Schmierprogramm vorgegebenen Zyklus einen Fettausstoß initiiert,
**dadurch gekennzeichnet,**
**dass** die Schmiereinheit (1) unmittelbar und ausschließlich mit einer im Fahrerhaus (13) oder an anderer zugänglicher Stelle des Fahrzeugs (12) angeordneten Eingabe- und Anzeigevorrichtung (7) kommuniziert, über welche ein Wechsel zwischen den Schmierprogrammen und das Auslösen einer Zwischenschmierung erfolgt.

2. Schmieranlage nach Anspruch 1, **dadurch gekennzeichnet, dass** die Eingabe- und Anzeigevorrichtung (7) einen einzigen Taster (8) und ein Signalmittel (9) umfasst.

3. Schmieranlage nach Anspruch 2, **dadurch gekennzeichnet, dass** das Steuerungsmodul (6) einen Mikroprozessor (10) aufweist.

4. Schmieranlage nach Anspruch 3, **dadurch gekennzeichnet, dass** der Mikroprozessor (10) eine Mehrfachnutzung des einzigen Tasters (8) sowohl für das Auslösen der Zwischenschmierung als auch den Wechsel zwischen den Schmierprogrammen ermöglicht.

5. Schmieranlage nach Anspruch 3 oder 4, **dadurch gekennzeichnet, dass** das Signalmittel (9) von dem Mikroprozessor (10) mit einer dem jeweiligen Systemstatus zugeordneten Frequenz angesteuert ist.

6. Schmieranlage nach einem der Ansprüche 2 bis 5, **dadurch gekennzeichnet, dass** an der Schmiereinheit (1) maximal ein Anschluss (11) für die elektrische Spannungsversorgung und jeweils ein Anschluss (12, 13) für den Taster (8) und das Signalmittel (9) vorgesehen sind.

7. Schmieranlage nach einem der Ansprüche 2 bis 5, **dadurch gekennzeichnet, dass** Anschlüsse (11, 12, 13) der elektrischen Spannungsversorgung, des Tasters (8) und des Signalmittels (9) in einem gemeinsamen Stecker (14) zusammengefasst sind.

8. Schmieranlage nach einem der Ansprüche 1 bis 7, **dadurch gekennzeichnet, dass** an dem Schmierstoffreservoir (2) ein Restmengenschalter (15) angeordnet ist, welcher mit dem Signalmittel (9) zusammenwirkt.

9. Schmieranlage nach einem der Ansprüche 1 bis 8, **dadurch gekennzeichnet, dass** die Komponenten (2, 3, 4, 6) der Schmiereinheit (1) in einem gemeinsamen Gehäuse (16) angeordnet sind.

10. Schmieranlage nach einem der Ansprüche 1 bis 9, **dadurch gekennzeichnet, dass** die Schmiereinheit (1) an die Zündung des Fahrzeugs (12) elektrisch angeschlossen ist.

11. Schmieranlage nach einem der Ansprüche 1 bis 10, **dadurch gekennzeichnet, dass** die Eingabe- und Anzeigevorrichtung (7) eine eigene Spannungsversorgung aufweist.

## Claims

1. Lubrication system for a utility vehicle (12) having a lubrication unit (1), comprising a lubricant reservoir (2), a pump (3) and a distributor (4) which is connected thereto and to which supply lines (5) to a plurality of lubrication locations can be fitted, and a control module (6) having at least two lubrication programs which are stored thereon, the pump (3) initiating a grease discharge in a cycle which is predetermined by the respective lubrication program,
**characterised in that**
the lubrication unit (1) communicates directly and exclusively with an input and display device (7) which is arranged in the driver's cabin (13) or at another accessible location of the vehicle (12) and by means of which a change is carried out between the lubrication programs and the initiation of an intermediate lubrication operation is carried out.

2. Lubrication system according to claim 1, **characterised in that** the input and display device (7) comprises a single button (8) and a signal means (9).

3. Lubrication system according to claim 2, **characterised in that** the control module (6) has a microprocessor (10).

4. Lubrication system according to claim 3, **characterised in that** the microprocessor (10) enables multiple use of the single button (8) both for the initiation of the intermediate lubrication and the change between the lubrication programs.

5. Lubrication system according to claim 3 or claim 4, **characterised in that** the signal means (9) is controlled by the microprocessor (10) with a frequency which is associated with the respective system status.

6. Lubrication system according to any one of claims 2 to 5, **characterised in that** there are provided on the lubrication unit (1) a maximum of one connection (11) for the electrical voltage supply and a connection (12, 13) for the button (8) and the signal means (9), respectively.

7. Lubrication system according to any one of claims 2 to 5, **characterised in that** connections (11, 12, 13) of the electrical voltage supply, the button (8) and the signal means (9) are combined in a common plug (14).

8. Lubrication system according to any one of claims 1 to 7, **characterised in that** there is arranged on the lubricant reservoir (2) a residual quantity switch (15) which co-operates with the signal means (9).

9. Lubrication system according to any one of claims 1 to 8, **characterised in that** the components (2, 3, 4, 6) of the lubrication unit (1) are arranged in a common housing (16).

10. Lubrication system according to any one of claims 1 to 9, **characterised in that** the lubrication unit (1) is electrically connected to the ignition of the vehicle (12).

11. Lubrication system according to any one of claims 1 to 10, **characterised in that** the input and display device (7) has its own voltage supply.

## Revendications

1. Installation de lubrification pour un véhicule utilitaire (12) équipé d'une unité de lubrification (1), comprenant un réservoir de lubrifiant (2), une pompe (3) et un distributeur (4) qui y est raccordé, auquel des conduites d'alimentation (5) allant à plusieurs points de lubrification peuvent être branchées, et un module de commande (6) dans lequel au moins deux programmes de lubrification sont stockés, la pompe (3) initiant une éjection de graisse dans un cycle prédéfini par le programme de lubrification concerné,
**caractérisée en ce**
**que** l'unité de lubrification (1) communique directement et exclusivement avec un dispositif d'entrée et d'affichage (7) disposé dans la cabine de conduite (13) ou à un autre endroit accessible du véhicule (12), au moyen duquel le passage d'un programme de lubrification à l'autre et le déclenchement d'une lubrification intermédiaire sont effectués.

2. Installation de lubrification selon la revendication 1, **caractérisée en ce que** le dispositif d'entrée et d'affichage (7) comprend un unique bouton-poussoir (8) et un moyen de signalisation (9).

3. Installation de lubrification selon la revendication 2, **caractérisée en ce que** le module de commande (6) présente un microprocesseur (10).

4. Installation de lubrification selon la revendication 3, **caractérisée en ce que** le microprocesseur (10) permet une utilisation multiple de l'unique bouton-poussoir (8) aussi bien pour le déclenchement de la lubrification intermédiaire que pour le passage d'un programme de lubrification à l'autre.

5. Installation de lubrification selon la revendication 3 ou 4, **caractérisée en ce que** le moyen de signalisation (9) est commandé par le microprocesseur (10) à une fréquence associée à l'état respectif du système.

6. Installation de lubrification selon une des revendications 2 à 5, **caractérisée en ce qu'**un raccordement (11) pour l'alimentation en tension électrique et des raccordements (12, 13) respectifs pour le bouton-poussoir (8) et le moyen de signalisation (9) sont prévus au maximum.

7. Installation de lubrification selon une des revendications 2 à 5, **caractérisée en ce que** les raccordements (11, 12, 13) de l'alimentation en tension électrique, du bouton-poussoir (8) et du moyen de signalisation (9) sont regroupés dans un connecteur commun (14).

8. Installation de lubrification selon une des revendications 1 à 7, **caractérisée en ce qu'**un contacteur de quantité restante (15) qui coopère avec le moyen de signalisation (9) est disposé sur le réservoir de lubrifiant (2).

9. Installation de lubrification selon une des revendications 1 à 8, **caractérisée en ce que** les composants (2, 3, 4, 6) de l'unité de lubrification (1) sont disposés dans un boîtier commun (16).

10. Installation de lubrification selon une des revendications 1 à 9, **caractérisée en ce que** l'unité de lubrification (1) est raccordée électriquement à l'allumage du véhicule (12).

11. Installation de lubrification selon une des revendications 1 à 10, **caractérisée en ce que** le dispositif d'entrée et d'affichage (7) présente une alimentation électrique séparée.
